(19) Europäisches Patentamt
European Patent Office
Office européen des brevets

(11) **EP 4 704 121 A1**

(12) **EUROPEAN PATENT APPLICATION**
published in accordance with Art. 153(4) EPC

(43) Date of publication:
**04.03.2026 Bulletin 2026/10**

(21) Application number: **24797059.3**

(22) Date of filing: **24.04.2024**

(51) International Patent Classification (IPC):
**H01F 1/057** (2006.01)    **C22C 38/00** (2006.01)

(52) Cooperative Patent Classification (CPC):
**C22C 38/00; H01F 1/057;** Y02T 10/64

(86) International application number:
**PCT/JP2024/016059**

(87) International publication number:
**WO 2024/225313 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 JP 2023074816**

(71) Applicant: **Proterial, Ltd.**
**Tokyo 135-0061 (JP)**

(72) Inventor: **KUNIYOSHI, Futoshi**
**Tokyo 135-0061 (JP)**

(74) Representative: **Diehl & Partner**
**Patent- und Rechtsanwaltskanzlei mbB**
**Erika-Mann-Straße 9**
**80636 München (DE)**

(54) **R-T-B SINTERED MAGNET**

(57) A sintered R-T-B based magnet containing: R: 26.5 mass% or more and 31.5 mass% or less (R is a rare earth element and contains at least one or two selected from the group consisting of Nd and Pr); M: 0.40 mass% or more and 1.50 mass% or less (M is at least one selected from the group consisting of Ga, Cu, Zn, Al, and Si, and necessarily contains Cu); B: 0.85 mass% or more and 0.94 mass% or less; T: 61.5 mass% or more (T is Fe and Co, and 90% or more of T is Fe in mass ratio); O: 0.05 mass% or more and 0.30 mass% or less; Tb: 0.20 mass% or less; and Dy: 0.30 mass% or less, the sintered R-T-B based magnet satisfying the following formula, in which in a range from a surface to a depth of 200 $\mu$m, a concentration of one or two selected from the group consisting of Nd and Pr and a concentration of Cu gradually decrease in a depth direction from the surface.
$$26.0\ \text{mass\%} \leq ([Nd] + [Pr] + [Ce] + [La] + [Dy] + [Tb]) - 12([O] + [C]) \leq 27.7\ \text{mass\%}$$

**FIG. 1**

**Description**

TECHNICAL FIELD

The present disclosure relates to a sintered R-T-B based magnet.

BACKGROUND ART

Sintered R-T-B based magnets (R is at least one rare earth element, T is Fe, or Fe and Co, and B is boron) is known as the highest performance magnet among permanent magnets. For this reason, sintered R-T-B based magnets are used in various motors in an automobile field such as an electric vehicle (EV, HV, PHV), a renewable energy field such as wind power generation, a home appliance field, an industrial field, and the like. The sintered R-T-B based magnet is a material essential for miniaturization, weight reduction, high efficiency, and energy saving (improvement of energy efficiency) of these motors. The sintered R-T-B based magnet is used in a drive motor for an electric vehicle, and by replacing an internal combustion engine vehicle with an electric vehicle, the sintered R-T-B based magnet also contributes to prevention of global warming by reduction of greenhouse gases such as carbon dioxide (reduction of fuel and exhaust gas). As described above, the sintered R-T-B based magnet greatly contributes to the realization of a clean energy society.

The sintered R-T-B based magnet is mainly composed of crystal grains made of $R_2T_{14}B$-type compound and a grain boundary phase located at a grain boundary portion of the crystal grains (for example, Patent Document 1). Patent Document 1 discloses a rare earth sintered magnet including $R_2T_{14}B$ main-phase crystal grains, two-grain boundary phases between adjacent two $R_2T_{14}B$ main-phase crystal grains, in which the thickness of the two-grain boundary phases is 5 nm or more and 500 nm or less and the two-grain boundary phases are composed of a phase with a magnetism different from that of a ferromagnet.

The $R_2T_{14}B$-type compound constituting the crystal grains is a ferromagnetic material having high saturation magnetization and an anisotropic magnetic field, and affects the characteristics of the sintered R-T-B based magnet.

The sintered R-T-B based magnet has a problem in that irreversible thermal demagnetization occurs because the coercivity $H_{cJ}$ (hereinafter, simply referred to as "$H_{cJ}$") decreases at a high temperature. Therefore, in particular, a sintered R-T-B based magnet used for an electric vehicle motor is required to have a high $H_{cJ}$ even at a high temperature, that is, to have a higher $H_{cJ}$ at room temperature.

PRIOR ART DOCUMENT

PATENT DOCUMENT

Patent Document 1: JP 2014-209546 A

SUMMARY OF THE INVENTION

PROBLEMS TO BE SOLVED BY THE INVENTION

It is known that when the light rare earth element RL (mainly, Nd and Pr) in the $R_2T_{14}B$-type compound is substituted with the heavy rare earth element RH (mainly, Tb and Dy), $H_{cJ}$ is improved. However, while $H_{cJ}$ is improved, there is a problem in that the saturation magnetization of the $R_2T_{14}B$-type compound phase decreases, and thus the residual magnetic flux density $B_r$ (hereinafter, simply referred to as "$B_r$") decreases. In particular, Tb has problems such as unstable supply and price fluctuation due to, for example, originally small resource amount and limited production sites. Therefore, it is required to obtain a high $H_{cJ}$ while suppressing a decrease in $B_r$ without using Tb as much as possible (by reducing the used amount as much as possible).

The rare earth sintered magnet disclosed in Patent Document 1 can suppress a decrease in $H_{cJ}$ at a high temperature while reducing the used amount of the heavy rare earth element RH such as Tb, but is inferior in magnetic characteristics ($B_r$ and $H_{cJ}$) to a sintered magnet containing the heavy rare earth element RH. In recent years, further improvement of $B_r$ and $H_{cJ}$ has been demanded particularly in an electric vehicle motor and the like.

Therefore, an object of an embodiment of the present invention is to provide a sintered R-T-B based magnet capable of further improving $B_r$ and $H_{cJ}$ while reducing a used amount of a heavy rare earth element RH such as Tb.

SOLUTIONS TO THE PROBLEMS

Aspect 1 of the present invention is a sintered R-T-B based magnet containing:

R: 26.5 mass% or more and 31.5 mass% or less (R is a rare earth element and contains one or two selected from the group consisting of Nd and Pr);
M: 0.40 mass% or more and 1.50 mass% or less (M is at least one selected from the group consisting of Ga, Cu, Zn, Al, and Si, and necessarily contains Cu);
B: 0.85 mass% or more and 0.94 mass% or less;
T: 61.5 mass% or more (T is Fe and Co, and 90% or more of T is Fe in mass ratio);
O: 0.05 mass% or more and 0.30 mass% or less;
Tb: 0.20 mass% or less; and
Dy: 0.30 mass% or less,
the sintered R-T-B based magnet satisfying the following Formula (1),
in which in a range from a surface to a depth of 200 $\mu$m, a concentration of one or two selected from the group consisting of Nd and Pr and a concentration of Cu gradually decrease in a depth direction from the surface.

$$26.0 \text{ mass\%} \leq ([Nd] + [Pr] + [Ce] + [La] + [Dy] + [Tb]) - 12([O] + [C]) \leq 27.7 \text{ mass\%} \tag{1}$$

Here, [Nd], [Pr], [Ce], [La], [Dy], [Tb], [O], and [C] are contents of Nd, Pr, Ce, La, Dy, Tb, O, and C expressed in mass%, respectively.

Aspect 2 of the present invention is
the sintered R-T-B based magnet according to Aspect 1, necessarily containing Ga as M, in which a content of Ga is 0.3 mass% or more, and in a range from the surface to a depth of 200 $\mu$m, a concentration of Ga does not gradually decrease.

EFFECTS OF THE INVENTION

According to an embodiment of the present invention, it is possible to provide a sintered R-T-B based magnet in which $B_r$ and $H_{cJ}$ are further improved while reducing a used amount of a heavy rare earth element RH such as Tb.

BRIEF DESCRIPTION OF THE DRAWING

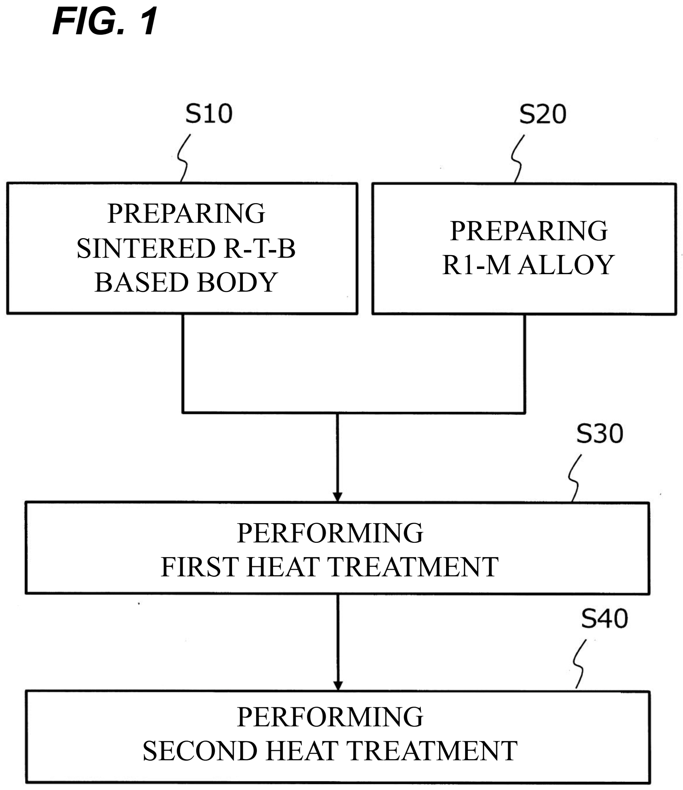

[Fig. 1] Fig. 1 is a flowchart illustrating a process example of a method for producing a sintered R-T-B based magnet according to an embodiment of the present invention.

DETAILED DESCRIPTION

The present inventor has intensively conducted studies in order to improve magnetic characteristics (particularly $B_r$ and $H_{cJ}$) of a sintered R-T-B based magnet while reducing a used amount of a heavy rare earth. It was found that in the case of a "low boron" composition in which the B content of the sintered R-T-B based magnet is lower than the stoichiometric composition of the $R_2T_{14}B$ compound, the effect of improving magnet characteristics by grain boundary diffusion of the rare earth element R and the metal element M is enhanced. In the $R_2T_{14}B$ compound, it was found that the same effect can be obtained even when a part of B is substituted with carbon (C). As a result of further examination, it was found that C substituted for B in the $R_2T_{14}B$ compound as the main phase was bonded to a rare earth oxide in the grain boundary by a sintering step, and a rare earth oxygen carbon compound (R-O-C compound) was generated in the grain boundary. It was also found that the atomic ratio in this case was R: (C, O) = 1 : 1. When such an R-O-C compound is generated at the grain boundary, the content of C constituting the $R_2T_{14}B$ compound as the main phase decreases accordingly. As described above, even when a part of B in the $R_2T_{14}B$ compound is substituted with C, the effect obtained by "low boron" is obtained. Therefore, as the content of C constituting the $R_2T_{14}B$ compound as the main phase decreases, the total amount of B and C effectively decreases. The formation of the R-O-C compound at the grain boundary means that a part of the rare earth element R contained in the raw material alloy is consumed in the production of the R-O-C compound. Note that the R-O-C compound (rare earth oxycarbide) includes an R-O compound (rare earth oxide) and an R-C compound (rare earth carbide).

From the above, the present inventor has assumed that when the rare earth element R and the metal element M is diffused from the surface to the inside of the low-boron sintered R-T-B based body, it is necessary to control the thickness and configuration of the grain boundary in order to optimize the effect of improving the magnet characteristics by diffusion, and for this purpose, the contents of R, O, and C need to satisfy an appropriate relationship. It was assumed that R controlled to have an appropriate content enhances the effect of improving the magnet characteristics by grain boundary diffusion of R and M in the sintered R-T-B based magnet having a low boron composition. As a result of examination based on these findings, it has been found that, by introducing R (Nd and Pr) and Cu by diffusion from the magnet surface into a sintered R-T-B based magnet satisfying Formula (1) described later and having a specific component composition in which the content of B and the content of M (Ga, Cu, Zn, Al, and Si) are controlled to appropriate amounts, a sintered R-T-B based magnet having excellent magnetic characteristics can be obtained, and the invention according to the embodiment of the present application has been completed.

Hereinafter, an R-sintered magnet according to an embodiment (hereinafter, sometimes simply referred to as a "sintered magnet") will be described in detail.

<Sintered R-T-B based Magnet>

A sintered R-T-B based magnet contains:

R: 26.5 mass% or more and 31.5 mass% or less (R is a rare earth element and contains one or two selected from the group consisting of Nd and Pr);
M: 0.40 mass% or more and 1.50 mass% or less (M is at least one selected from the group consisting of Ga, Cu, Zn, Al, and Si, and necessarily contains Cu);
B: 0.85 mass% or more and 0.94 mass% or less;
T: 61.5 mass% or more (T is Fe and Co, and 90% or more of T is Fe in mass ratio);
O: 0.05 mass% or more and 0.30 mass% or less;
Tb: 0.20 mass% or less; and
Dy: 0.30 mass% or less.

It is desirable that the content of the heavy rare earth elements RH (particularly Tb and Dy) contained in the sintered magnet is smaller than that in the related art. The sintered magnet may not contain RH. That is, the lower limit of the content of RH in the sintered magnet is 0 mass%.

The content of Tb is preferably limited to 0.10 mass% or less.

The content of Dy is preferably limited to 0.20 mass% or less.

The sintered magnet satisfies the following Formula (1).

$$26.0 \text{ mass\%} \leq ([Nd] + [Pr] + [Ce] + [La] + [Dy] + [Tb]) - 12([O] + [C]) \leq 27.7 \text{ mass\%} \tag{1}$$

Here, [Nd], [Pr], [Ce], [La], [Dy], [Tb], [O], and [C] are contents of Nd, Pr, Ce, La, Dy, Tb, O, and C expressed in mass%, respectively. Note that when the sintered magnet does not contain any one or more of Nd, Pr, Ce, La, Dy, Tb, O, and C, the content of the element not contained is regarded as "0 mass%" and substituted into Formula (1).

By adjusting the contents of R (particularly, Nd, Pr, Ce, La, Dy, and Tb), O, and C in the sintered magnet so as to satisfy the above Formula (1), high $B_r$ and $H_{cJ}$ can be obtained. The content of C (carbon) in the sintered magnet is preferably 0.05 mass% or more and 0.18 mass% or less. Note that the content of C can be adjusted by the amount of a lubricant added at the time of pulverization or forming.

Formula (1) is preferably 26.0 mass% or more and 27.5 mass% or less, more preferably 26.3 mass% or more and 27.4 mass% or less, and particularly preferably 27.0 mass% or more and 27.4 mass% or less. It is possible to obtain high $B_r$ and $H_{cJ}$ while further reducing the used amount of the heavy rare earth element RH such as Tb.

Each component composition of the sintered magnet will be described in detail.

(R: 26.5 mass% or more and 31.5 mass% or less)

R is a rare earth element and contains one or two selected from the group consisting of Nd and Pr. The content of R is 26.5 mass% or more and 31.5 mass% or less. When the content of R is less than 26.5 mass%, densification during sintering may be difficult, and when the content of R is more than 31.5 mass%, the ratio of the main phase may decrease, leading to a decrease in $B_r$. The content of R is preferably 26.8 mass% or more and 30.0 mass% or less. When R is in such a range, a higher $B_r$ can be obtained.

(M: 0.40 mass% or more and 1.50 mass% or less)

M is at least one selected from the group consisting of Ga, Cu, Zn, Al, and Si and necessarily contains Cu. The content of M (total content of Ga, Cu, Zn, Al, and Si) is 0.40 mass% or more and 1.50 mass% or less. When M is in this range, a high $H_{cJ}$ can be achieved.

The sintered magnet necessarily contains Cu as M, but preferably further contains Ga, and $H_{cJ}$ can be further improved.

As a result of further studies, the present inventor has newly found that, as compared with a sintered magnet produced by diffusing one or two selected from the group consisting of Nd and Pr, Cu, and a part or the entire amount of Ga in a diffusion step, a remarkably higher $H_{cJ}$ can be achieved in the case of producing a sintered magnet by causing 0.3 mass% or more of Ga to be contained in a sintered body, the entire amount of Ga being derived from a raw material (that is, being contained in an alloy for a sintered magnet), and then diffusing one or two selected from the group consisting of Nd and Pr, and Cu. That is, it is preferable that the sintered magnet of the present disclosure necessarily contains Cu and Ga as M, the content of Ga is 0.3 mass% or more, and in a range from the surface to a depth of 200 $\mu$m, the concentration of Ga does not gradually decrease in the depth direction from the surface. The fact that the concentration of Ga does not gradually decrease in the depth direction from the surface indicates that a step of performing diffusion from the magnet surface toward the inside of the magnet using a diffusion source containing Ga is not performed.

As described above, Cu is preferably derived from Cu diffused from the surface of the sintered body in the diffusion step performed after the sintering step, and $H_{cJ}$ can be improved. The entire amount of Cu contained in the sintered magnet may be derived from diffusion, or a part of Cu may be derived from a raw material.

The preferred content of each of Ga, Cu, Zn, Al, and Si is as follows:

Ga: more than 0.3 mass% and 0.80 mass% or less;
Cu: more than 0.1 mass% and 0.70 mass% or less;
Zn: 0 mass% or more and 0.2 mass% or less;
Al: 0 mass% or more and 0.8 mass% or less; and
Si: 0 mass% or more and 0.2 mass% or less.

(B: 0.85 mass% or more and 0.94 mass% or less)

The content of B is 0.85 mass% or more and 0.94 mass% or less. When the sintered magnet contains B within the range of the present disclosure, a high $H_{cJ}$ can be achieved. The content thereof is preferably 0.85 mass% or more and 0.90 mass% or less, and more preferably 0.87 mass% or more and 0.88 mass% or less, and $H_{cJ}$ can be further improved.

(O: 0.05 mass% or more and 0.30 mass% or less)

The content of O is 0.05 mass% or more and 0.30 mass% or less. When the sintered magnet contains O within the range of the present disclosure, a high $H_{cJ}$ can be achieved.

(Tb: 0.20 mass% or less)

The content of Tb is 0.20 mass% or less and preferably 0.10 mass% or less. When Tb is contained, $H_{cj}$ of the sintered magnet can be improved, but when Tb is excessively contained, $B_r$ decreases. Since Tb has a small resource amount and a production site is limited, it is desired to reduce the used amount as much as possible, and it is preferable not to contain Tb (that is, the Tb content is 0 mass%).

(Dy: 0.30 mass% or less)

The content of Dy is 0.30 mass% or less and preferably 0.20 mass% or less. Dy may not be contained (that is, the Dy content may be 0 mass%). Similarly to Tb, when Dy is contained, $H_{cj}$ of the sintered magnet can be improved, but when Dy is excessively contained, $B_r$ decreases.

(T: 61.5 mass% or more)

T is Fe and Co, and 90% or more of T is Fe in mass ratio.

The content of T contained in the sintered magnet is 61.5 mass% or more, and $B_r$ can be improved. Particularly preferably, in the component composition of the sintered magnet, the balance is T and inevitable impurities. For example, in the case of a sintered magnet containing R, M, B, O, and C and not containing Tb, Dy and an optional additive element described later, the balance of R, M, B, O, and C is preferably T and inevitable impurities.

Note that Co may be contained as a part of T, and corrosion resistance can be improved, but when the ratio of the content of Co to the content of T is more than 10%, there is a possibility that a high $B_r$ cannot be obtained.

The sintered magnet can contain Cr, Mn, La, Ce, Sm, Ca, Mg, and the like as inevitable impurities usually contained in a didymium alloy (Nd-Pr), electrolytic iron, ferroboron, and the like. Examples of the inevitable impurities contained in the production process include N (nitrogen).

The sintered magnet according to the embodiment may contain one or more other elements (optional additive elements). For example, a small amount (each about 0.1 mass%) of Ag, In, Sn, Ti, Ge, Y, H, F, P, S, V, Ni, Mo, Hf, Ta, W, Nb, Zr, Pb, Bi, and the like may be contained as such elements. Such elements may be contained in a total amount of, for example, about 1.0 mass%. With this degree, it is sufficiently possible to obtain a sintered R-T-B based magnet having a high $H_{cJ}$ at a high temperature.

In the sintered magnet in the embodiment, in a range from the surface to a depth of 200 μm, the concentration of one or two selected from the group consisting of Nd and Pr gradually decreases in the depth direction from the surface. In addition, in a range from the surface to a depth of 200 μm, the concentration of Cu also gradually decreases in the depth direction from the surface. The sintered magnet having such a concentration distribution is obtained by carrying out the step of performing diffusion from the magnet surface toward the inside of the magnet using one or two selected from the group consisting of Nd and Pr and a diffusion source containing Cu at the time of producing a sintered magnet.

By performing the diffusion step at the time of producing a sintered magnet, the magnetic characteristics of a sintered magnet to be obtained can be improved.

Note that it is preferable that the concentration of Ga does not gradually decrease in a range from the surface to a depth of 200 μm. That is, the step of performing diffusion using a diffusion source containing Ga is preferably not performed.

The concentrations of Nd, Pr, and Cu in a range from the surface to a depth of 200 μm can be confirmed by performing line analysis in a range from the magnet surface toward the vicinity of the center of the magnet to a depth of 200 μm in the cross section of the sintered magnet by energy dispersive X-ray spectroscopy (EDX). Note that it is preferable that measurement is performed in a cross section perpendicular to the surface and 200 μm or more away from the end of the surface. When line analysis is performed, measurement is performed in a direction orthogonal to the surface (the outer periphery of the measurement cross section) in a region 200 μm or more away from the end of the measurement cross section so as not to measure a range within 200 μm from the outer periphery of the measurement cross section.

The concentration of Ga can also be confirmed by performing measurement in the same manner.

<Method for Producing sinteredsintered R-T-B based Magnet>

Hereinafter, an embodiment of a method for producing a sintered R-T-B based magnet of the present disclosure will be described.

As illustrated in Fig. 1, the production method in the present embodiment can include step S10 of preparing a sintered R-T-B based body, step S20 of preparing an R1-M alloy, step S30 of performing a first heat treatment, and step S40 of performing a second heat treatment. Step S30 is a step of bringing at least a part of the R1-M alloy into contact with at least a part of the surface of the sintered R-T-B based body, and performing a first heat treatment in a vacuum or an inert gas atmosphere at a temperature of 700°C or higher and 950°C or lower to diffuse R1 and M into the inside of the magnet (diffusion step). Step S40 is a step of subjecting the sintered R-T-B based magnet subjected to the first heat treatment to a second heat treatment in a vacuum or an inert gas atmosphere at a temperature of 400°C or higher and 750°C or lower and at a temperature lower than the first heat treatment temperature. Hereinafter, each of these steps will be described in more detail.

(Step of preparing sintered R-T-B based body)

First, the composition of a sintered R-T-B based body (hereinafter, sometimes simply referred to as a "sintered body") will be described.

One of the features of the sintered body used in the present embodiment is to adjust R, the amount of oxygen, the amount of carbon, and the like contained in the sintered body, and to finally prepare a sintered magnet satisfying the above-described Formula (1). Therefore, in this sintered body, it is preferable to prepare a sintered body satisfying the relationships of 0.85 mass% ≤ [B] ≤ 0.94 mass%, 25.8 mass% ≤ ([Nd] + [Pr] + [Ce] + [La] + [Dy] + [Tb] - 12([O] + [C]) ≤ 27.5 mass%, and 0.05 mass% ≤ [O] ≤ 0.30 mass%. By subjecting such a sintered body to the diffusion step described later, R, M, and the like are not excessively diffused into the sintered body, and grain boundary diffusion can be greatly promoted.

The sintered body prepared in this step has, for example, the following composition.

The sintered body contains:

R: 26.3 mass% or more and 31.3 mass% or less (R is a rare earth element and contains one or two selected from the group consisting of Nd and Pr);
B: 0.85 mass% or more and 0.94 mass% or less;
T: 61.5 mass% or more (T is Fe and Co, and 90% or more of T is Fe in mass ratio);
M: 0.40 mass% or more and 1.50 mass% or less (M is at least one selected from the group consisting of Ga, Cu, Zn, Al, and Si, and necessarily contains Cu);
Tb: 0.20 mass% or less; and

Dy: 0.30 mass% or less.

Preferably, the balance consists of T and inevitable impurities.

Next, a method for preparing a sintered body will be described.

First, an alloy for a sintered R-T-B based magnet (hereinafter, sometimes simply referred to as an "alloy for a sintered magnet") is prepared, and then this alloy is coarsely pulverized by, for example, a hydrogen pulverization method or the like.

A method for producing an alloy for a sintered magnet will be exemplified. An alloy ingot can be obtained by an ingot casting method in which a metal or an alloy which has been adjusted in advance so as to have the above-described composition is melted and put into a mold to be solidified. An alloy may be produced by a strip casting method in which a molten metal or alloy which has been adjusted in advance to have the composition described above is brought into contact with a single roll, a twin roll, a rotating disk, a rotating cylindrical mold, or the like and quenched to produce a quench-solidified alloy. A flaky alloy may be produced by another rapid cooling method such as a centrifugal casting method.

In the embodiment of the present invention, an alloy produced by either an ingot method or a rapid cooling method can be used, but it is preferable to use an alloy produced by a rapid cooling method such as a strip casting method. The thickness of the alloy prepared by the rapid cooling method is usually in a range of 0.03 mm or more and 1 mm or less, and has a flake shape. The molten alloy starts to solidify from the contact surface (roll contact surface) of a cooling roll, and crystals grow in a columnar shape from the roll contact surface in a thickness direction. Since the quenched alloy is cooled in a short time as compared with an alloy (ingot alloy) prepared by a conventional ingot casting method (mold casting method), the structure is refined and the crystal grain size is small. The area of the grain boundary is wide. Since the R-rich phase greatly spreads in the grain boundary, the rapid cooling method is excellent in the dispersibility of the R-rich phase. Therefore, it is easy to break the quenched alloy at the grain boundary by the hydrogen pulverization method. By subjecting the quenched alloy to hydrogen pulverization, the size of the hydrogen pulverized powder (coarsely pulverized powder) can be set to, for example, 1.0 mm or less. The coarsely pulverized powder thus obtained is pulverized by, for example, a jet mill.

In the present embodiment, the conditions for pulverization are adjusted so that the oxygen content of a sintered magnet to be finally obtained falls within a specific range (0.05 mass% or more and 0.30 mass% or less). In the jet mill pulverization, pulverization is performed in an inert atmosphere such as nitrogen. The pulverization may be, for example, jet milling in a humidified atmosphere. Preferably, the powder particles are reduced in size (an average particle size d50 is 2.0 $\mu$m or more and 10.0 $\mu$m or less, still more preferably d50 is 2.0 $\mu$m or more and 8.0 $\mu$m or less, still more preferably the average particle size is 2.0 $\mu$m or more and 4.5 $\mu$m or less, and still more preferably the average particle size is 2.0 $\mu$m or more and 3.5 $\mu$m or less). By making the powder particles small, a high $H_{cJ}$ can be obtained.

Note that the average particle size (d50) can be measured by an airflow dispersion type laser diffraction method (in accordance with JIS Z 8825:2013, revised edition). That is, in the present specification, the average particle size means a particle size (median diameter) at which an integrated particle size distribution (volume basis) from a small particle size side is 50%.

A fine powder used for producing a sintered body may be produced from one kind of raw material alloy (single raw material alloy) or may be produced by a method (blending method) in which two or more kinds of raw material alloys are used and mixed as long as the above-described respective conditions are satisfied.

In a preferred embodiment, after a powder compact is prepared from the above-described fine powder by pressing in a magnetic field, the powder compact is sintered to obtain a sintered R-T-B based body.

In the preparation of the powder compact, it is preferable to form the powder compact by pressing in an inert gas atmosphere or wet pressing from the viewpoint of suppressing oxidation in pressing in a magnetic field. In particular, in the wet press, the surfaces of the particles constituting the powder compact are covered with a dispersant such as an oil agent, and the contact with oxygen and water vapor in the atmosphere is suppressed. Therefore, it is possible to prevent or suppress the particles from being oxidized by the atmosphere before and after the pressing step or during the pressing step. Therefore, it is easy to control the oxygen content of the sintered magnet within a predetermined range. In the case of performing wet pressing in a magnetic field, a slurry in which a dispersion medium is mixed with a fine powder is prepared, supplied to a cavity of a form of a wet pressing device, and press-formed in a magnetic field.

The powder compact is preferably sintered at a temperature in a range of 950°C or higher and 1150°C or lower. In order to prevent oxidation due to sintering, the residual gas in the atmosphere may be replaced by an inert gas such as helium or argon. The obtained sintered body may be subjected to a heat treatment. As heat treatment conditions such as a heat treatment temperature and a heat treatment time, known conditions can be adopted.

Note that the sintered body is not limited to forming or the like, and the sintered body may be prepared by a known method such as a press-less process (PLP) method described in JP 2006-19521 A or the like.

(Step of Preparing R1-M Alloy)

In the present embodiment, R1 and M are diffused from the surface of the sintered body to the inside. Therefore, an alloy containing these elements to be diffused (this is referred to as an "R1-M alloy") is prepared.

First, the composition of the R1-M alloy will be described. R1 in the R1-M alloy is a rare earth and is one or two selected from the group consisting of Nd and Pr, and the content of R1 is preferably 65 mass% or more and 95 mass% or less, and more preferably 70 mass% or more and 95 mass% or less with respect to the entire R1-M alloy. M in the R1-M alloy is at least one selected from the group consisting of Ga, Cu, Zn, Al, and Si, and necessarily contains Cu. In a preferred embodiment, M is at least one selected from the group consisting of Cu, Zn, and Si, and necessarily contains Cu. The content of M is preferably 5 mass% or more and 35 mass% or less of the entire R1-M alloy, and more preferably 5 mass% or more and 30 mass% or less of the entire R1-M alloy.

The shape and size of the R1-M alloy are not particularly limited, and are arbitrary. The R1-M alloy may have the shape of a film, a foil, a powder, a block, a particle, or the like.

Next, a method for producing an R1-M alloy will be described.

The R1-M alloy can be prepared using a method for preparing a raw material alloy adopted in a general method for producing a sintered magnet, for example, a mold casting method, a strip casting method, a single roll ultra-rapid cooling method (melt spinning method), an atomizing method, or the like. The R1-M alloy may be obtained by pulverizing the alloy obtained as described above by a known pulverizing means such as a pin mill.

(Step of Performing First Heat Treatment (Diffusion Step))

At least a part of the R1-M alloy is brought into contact with at least a part of the surface of the sintered body prepared by the above-described method, and the first heat treatment is performed in a vacuum or an inert gas atmosphere at a temperature of 700°C or higher and 950°C or lower (first heat treatment temperature). The first heat treatment is a step for diffusing R1 and M into the inside of the sintered body (that is, diffusion step). By the heat treatment, a liquid phase containing R1 and M is generated from the R1-M alloy, and elements forming the liquid phase are diffused and introduced from the surface of the sintered body into the inside of the sintered body via a grain boundary in the sintered body.

When the first heat treatment temperature is lower than 700°C, the amount of the liquid phase containing R1 and M is too small to obtain a high $H_{cJ}$. On the other hand, when the temperature exceeds 950°C, there is a possibility that $H_{cJ}$ decreases. The first heat treatment temperature is preferably 850°C or higher and 950°C or lower, and a higher $H_{cJ}$ can be obtained. Preferably, the sintered body subjected to the first heat treatment (700°C or higher and 950°C or lower) is cooled from the first heat treatment temperature to 300°C at a cooling rate of 5°C/min or more, and a higher $H_{cJ}$ can be obtained. More preferably, the cooling rate is 15°C/min or more.

The first heat treatment can be performed by disposing an R1-M alloy having an arbitrary shape on the surface of the sintered body and using a known heat treatment apparatus. For example, the surface of the sintered body can be covered with a powder layer of an R1-M alloy, and the first heat treatment can be performed. For example, after a slurry in which the R1-M alloy is dispersed in a dispersion medium is applied to the surface of the sintered body, the dispersion medium is evaporated to bring an R1-M alloy layer into contact with the sintered body, and the first heat treatment can be performed. Examples of the dispersion medium include alcohols (such as ethanol), aldehydes, and ketones. For example, an R1-M alloy film can be formed on the surface of the sintered body by a known sputtering apparatus or the like, and the first heat treatment can be performed. When the heavy rare earth element RH is introduced into the sintered body, not only the method using the R1-M alloy containing RH but also the first heat treatment may be performed by disposing a fluoride, an oxide, an acid fluoride, or the like of the heavy rare earth element RH together with the R1-M alloy on the surface of the sintered body. Examples of the fluoride, oxide, and acid fluoride of the heavy rare earth element RH include $TbF_3$, $DyF_3$, $Tb_2O_3$, $Dy_2O_3$, TbOF, and DyOF.

The disposition position of the R1-M alloy is not particularly limited as long as at least a part of the R1-M alloy is in contact with at least a part of the sintered body.

(Step of Performing Second Heat Treatment)

The sintered body subjected to the first heat treatment is subjected to a heat treatment in a vacuum or an inert gas atmosphere at 400°C or higher and 750°C or lower and at a temperature lower than the first heat treatment temperature. In the present disclosure, this heat treatment is referred to as a second heat treatment. By performing the second heat treatment, a high $H_{cJ}$ can be obtained. When the temperature at which the second heat treatment is performed (second heat treatment temperature) is higher than the first heat treatment temperature, or when the second heat treatment temperature is lower than 400°C or higher than 750°C, a high $H_{cJ}$ may not be obtained.

EXAMPLES

Raw materials of the respective elements were weighed so that the sintered R-T-B based body had compositions shown in Nos. A to H in Table 1, and an alloy was produced by a strip casting method. Each of the obtained alloys was coarsely pulverized by a hydrogen pulverization method to obtain a coarsely pulverized powder. Next, zinc stearate as a lubricant was added to and mixed with the coarsely pulverized powder thus obtained, and then dry-pulverized in a nitrogen flow using a pneumatic pulverizer (jet mill apparatus) to obtain a finely pulverized powder (alloy powder) having an average particle size d50 of 3 μm.

Zinc stearate as a lubricant was added to and mixed with the finely pulverized powder, and then formed in a magnetic field to obtain a powder compact. Note that, as a forming apparatus, a so-called orthogonal magnetic field forming apparatus (transverse magnetic field forming apparatus) in which a magnetic field application direction and a pressing direction are orthogonal to each other was used. The obtained powder compact was sintered at 1000°C or higher and 1090°C or lower (the temperature at which densification by sintering sufficiently occurred was selected for each sample) in a vacuum for 4 hours to obtain a sintered R-T-B based body. The density of the obtained sintered R-T-B based body was 7.5 Mg/m³ or more. The composition of the obtained sintered R-T-B based body is shown in Table 1. Each component in Table 1 was measured using inductively coupled plasma optical emission spectrometry (ICP-OES). The O (oxygen) content was measured using a gas analyzer by a gas fusion-infrared absorption method, and the C (carbon) content was measured using a gas analyzer by a combustion-infrared absorption method. The composition of the R1-M alloy (Table 2) was also measured by the same measurement method.

[Table 1]

| No. | Composition (mass%) of sintered R-T-B based body | | | | | | | | |
|-----|------|-----|------|------|------|------|------|------|------|
|     | Nd   | Pr  | B    | Co   | Al   | Cu   | Ga   | Zr   | Fe   |
| A   | 22.7 | 5.4 | 0.88 | 0.11 | 0.05 | 0.04 | 0.01 | 0.11 | bal. |
| B   | 22.8 | 5.4 | 0.88 | 0.11 | 0.05 | 0.04 | 0.11 | 0.11 | bal. |
| C   | 22.8 | 5.4 | 0.88 | 0.11 | 0.05 | 0.04 | 0.52 | 0.11 | bal. |
| D   | 22.8 | 5.4 | 0.90 | 0.11 | 0.05 | 0.04 | 0.01 | 0.11 | bal. |
| E   | 22.9 | 5.4 | 0.90 | 0.11 | 0.05 | 0.04 | 0.11 | 0.11 | bal. |
| F   | 22.8 | 5.4 | 0.90 | 0.11 | 0.05 | 0.04 | 0.52 | 0.11 | bal. |
| G   | 22.8 | 5.4 | 0.92 | 0.11 | 0.05 | 0.04 | 0.01 | 0.11 | bal. |
| H   | 22.9 | 5.4 | 0.96 | 0.11 | 0.05 | 0.04 | 0.01 | 0.11 | bal. |

Raw materials of the respective elements were weighed so that the R1-M alloy had a composition shown in No. a of Table 2, and these raw materials were dissolved to obtain a ribbon or flaky alloy by a single roll ultra-rapid cooling method (melt spinning method). The obtained alloy was pulverized in an argon gas atmosphere using a mortar, and then passed through a sieve with a mesh size of 425 μm to prepare an R1-M alloy. The composition of the obtained R1-M gold is shown in Table 2.

[Table 2]

| No. | Composition (mass%) of R1-M alloy | |
|-----|------|------|
|     | Pr   | Cu   |
| a   | 90   | 10   |

The sintered R-T-B based bodies of Nos. A to H in Table 1 were cut and ground to form a cube of 7.4 mm × 7.4 mm × 7.4 mm. Next, 3 mass% of an R1-M alloy (No. a) with respect to 100 mass% of the sintered R-T-B based body was sprayed on the entire surface of the sintered R-T-B based bodies of Nos. A to H. The sintered R-T-B based magnet of No. 1 shown in Table 3 was subjected to a diffusion step using the sintered R-T-B based body of No. A in Table 1 and the R1-M alloy of No. a in Table 2. The same applies to Nos. 2 to 8.

Thereafter, a heat treatment (first heat treatment) was performed at 900°C for 4 hours in a reduced pressure argon gas controlled at 50 Pa, and then cooling to room temperature was performed. A heat treatment (second heat treatment) was further performed at 480°C for 3 hours in a reduced-pressure argon gas controlled at 50 Pa, and then cooling to room temperature was performed to produce a sintered R-T-B based magnet (Nos. 1 to 8).

The composition of the obtained sintered R-T-B based magnet and the value of the middle side (that is, [Nd] + [Pr] + [Ce] + [La] + [Dy] + [Tb]) - 12([O] + [C]) of Formula (1) are shown in Table 3. Each component in Table 3 was measured using inductively coupled plasma optical emission spectrometry (ICP-OES). The O (oxygen) content was measured using a gas analyzer by a gas fusion-infrared absorption method, and the C (carbon) content was measured using a gas analyzer by a combustion-infrared absorption method.

Note that the composition in Table 3 is as follows.

· Since the contents of Ce, La, Dy, and Tb were equal to or less than the detection limit, the R content was calculated by summing the Nd content and the Pr content.
· Since the contents of Zn and Si were equal to or less than the detection limit, the M content was calculated by summing the Cu content, the Ga content, and the Al content.
· Even when it is assumed that other elements including Zr and the like detected in the sintered body are contained at about 1 mass% at the maximum, the balance T (Fe and Co) exceeded 61.5 mass%.

The obtained sintered R-T-B based magnet was machined to obtain a magnet sample of 7 mm × 7 mm × 7 mm, and magnetic characteristics ($B_r$ and $H_{cJ}$) were measured by a BH tracer. The measurement results are shown in Table 3. Line analysis was performed by EDX from the magnet surface to the vicinity of the magnet central portion in the magnet cross section of Nos. 1 to 8. In any of Nos. 1 to 8, it was confirmed that each of the concentration of Pr and the concentration of Cu gradually decreased (the concentration gradually decreased) in the depth direction (from the magnet surface to the magnet central portion direction) from the surface in a range from the magnet surface to a depth of 200 μm. In any of Nos. 1 to 8, it was confirmed that the concentration of Ga did not gradually decrease in the depth direction from the surface in a range from the magnet surface to a depth of 200 μm.

[Table 3]

| No. | Composition (mass%) of sintered R-T-B based magnet | | | | | | | | | Magnetic characteristics | | Diffusion condition | | Remarks |
| | R | Formula (1) | B | Cu | Ga | Al | M | O | C | Br (T) | $H_{cJ}$ (kA/m) | sintered R-T-B based body | R1-M alloy | |
|---|---|---|---|---|---|---|---|---|---|---|---|---|---|---|
| 1 | 29.5 | 26.9 | 0.86 | 0.31 | 0.00 | 0.05 | 0.36 | 0.10 | 0.12 | 1.45 | 1165 | A | a | Comparative Example |
| 2 | 29.6 | 27.0 | 0.87 | 0.31 | 0.10 | 0.05 | 0.46 | 0.10 | 0.12 | 1.44 | 1442 | B | a | Present Invention Example |
| 3 | 29.9 | 27.4 | 0.87 | 0.33 | 0.49 | 0.05 | 0.87 | 0.09 | 0.12 | 1.42 | 1806 | C | a | Present Invention Example |
| 4 | 29.7 | 27.1 | 0.89 | 0.31 | 0.00 | 0.05 | 0.36 | 0.10 | 0.12 | 1.46 | 1064 | D | a | Comparative Example |
| 5 | 29.7 | 27.1 | 0.88 | 0.31 | 0.10 | 0.05 | 0.46 | 0.10 | 0.12 | 1.44 | 1367 | E | a | Present Invention Example |
| 6 | 29.7 | 27.2 | 0.89 | 0.31 | 0.47 | 0.05 | 0.83 | 0.09 | 0.12 | 1.44 | 1530 | F | a | Present Invention Example |
| 7 | 29.4 | 26.8 | 0.90 | 0.29 | 0.00 | 0.04 | 0.33 | 0.10 | 0.12 | 1.47 | 1192 | G | a | Comparative Example |
| 8 | 29.0 | 26.4 | 0.95 | 0.23 | 0.00 | 0.05 | 0.28 | 0.10 | 0.12 | 1.48 | 1118 | H | a | Comparative Example |

As shown in Table 3, Nos. 2, 3, 5, and 6 as the present invention examples did not contain Tb, the residual magnetic flux density ($B_r$) was 1.40 T or more, and the coercivity ($H_{cJ}$) was 1300 kA/m or more. As described above, a sintered R-T-B based magnet having a high $B_r$ and a high $H_{cJ}$ while reducing the used amount of the heavy rare earth element RH such as Tb was obtained. On the other hand, in Comparative Examples (Nos. 1, 4, 7, and 8) in which the concentration of M and the concentration of B were out of the range of the present disclosure, a high residual magnetic flux density ($B_r$) was 1.40 T or more, that is, a high $B_r$ was obtained, but the coercivity ($H_{cJ}$) was less than 1300 kA/m, and a high $H_{cJ}$ was not obtained.

The present application includes a priority claim based on Japanese Patent Application No. 2023-074816 filed on April 28, 2023, the entire contents of which are incorporated herein by reference.

**Claims**

1. A sintered R-T-B based magnet comprising:

    R: 26.5 mass% or more and 31.5 mass% or less (R is a rare earth element and contains one or two selected from the group consisting of Nd and Pr);
    M: 0.40 mass% or more and 1.50 mass% or less (M is at least one selected from the group consisting of Ga, Cu, Zn, Al, and Si, and necessarily contains Cu);
    B: 0.85 mass% or more and 0.94 mass% or less;
    T: 61.5 mass% or more (T is Fe and Co, and 90% or more of T is Fe in mass ratio);
    O: 0.05 mass% or more and 0.30 mass% or less;
    Tb: 0.20 mass% or less; and
    Dy: 0.30 mass% or less,
    the sintered R-T-B based magnet satisfying the following Formula (1),
    wherein in a range from a surface to a depth of 200 μm, a concentration of one or two selected from the group consisting of Nd and Pr and a concentration of Cu gradually decrease in a depth direction from the surface:

    $$26.0 \text{ mass\%} \leq ([Nd] + [Pr] + [Ce] + [La] + [Dy] + [Tb]) - 12([O] + [C]) \leq 27.7 \text{ mass\%} \qquad (1)$$

    where, [Nd], [Pr], [Ce], [La], [Dy], [Tb], [O], and [C] are contents of Nd, Pr, Ce, La, Dy, Tb, O, and C expressed in mass%, respectively.

2. The sintered R-T-B based magnet according to claim 1, necessarily comprising Ga as M,
    wherein a content of Ga is 0.3 mass% or more, and in a range from the surface to a depth of 200 μm, a concentration of Ga does not gradually decrease.

## FIG. 1

## INTERNATIONAL SEARCH REPORT

| International application No. |
|---|
| **PCT/JP2024/016059** |

**A. CLASSIFICATION OF SUBJECT MATTER**

*H01F 1/057*(2006.01)i; *C22C 38/00*(2006.01)i
FI:  H01F1/057 170; C22C38/00 303D

According to International Patent Classification (IPC) or to both national classification and IPC

**B. FIELDS SEARCHED**

Minimum documentation searched (classification system followed by classification symbols)

H01F1/057; C22C38/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7248169 B1 (PROTERIAL LTD.) 29 March 2023 (2023-03-29)<br>paragraphs [0001]-[0080], fig. 1-3 | 1-2 |
| A | JP 2020-92122 A (TDK CORPORATION) 11 June 2020 (2020-06-11) | 1-2 |
| A | JP 7044218 B1 (HITACHI METALS, LTD.) 30 March 2022 (2022-03-30) | 1-2 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/016059**

| Patent document cited in search report | | | Publication date (day/month/year) | Patent family member(s) | | | Publication date (day/month/year) |
|---|---|---|---|---|---|---|---|
| JP | 7248169 | B1 | 29 March 2023 | WO | 2023/181770 | A1 | |
| | | | | paragraphs [0001]-[0081], fig. 1-3 | | | |
| JP | 2020-92122 | A | 11 June 2020 | US | 2020/0176155 | A1 | |
| | | | | DE | 102019132700 | A | |
| | | | | CN | 111261353 | A | |
| JP | 7044218 | B1 | 30 March 2022 | US | 2023/0260684 | A1 | |
| | | | | WO | 2022/065242 | A1 | |
| | | | | CN | 116368585 | A | |

Form PCT/ISA/210 (patent family annex) (July 2022)

**REFERENCES CITED IN THE DESCRIPTION**

**Patent documents cited in the description**

- JP 2014209546 A
- JP 2006019521 A
- JP 2023074816 A